(19) Europäisches Patentamt

European Patent Office

Office européen des brevets

(11) Veröffentlichungsnummer: **0 170 709**
**B1**

(12) **EUROPÄISCHE PATENTSCHRIFT**

(45) Veröffentlichungstag der Patentschrift:
**01.06.88**

(21) Anmeldenummer: **84109178.8**

(22) Anmeldetag: **02.08.84**

(51) Int. Cl.⁴: **G 01 G 7/02,** G 01 G 7/04,
G 01 G 21/00

(54) Vorrichtung zur berührungslosen Ankoppelung eines hängenden Schwebeteils an eine Kraftmesseinrichtung.

(43) Veröffentlichungstag der Anmeldung:
**12.02.86 Patentblatt 86/7**

(45) Bekanntmachung des Hinweises auf die Patenterteilung:
**01.06.88 Patentblatt 88/22**

(84) Benannte Vertragsstaaten:
**AT BE CH DE FR GB IT LI LU NL SE**

(56) Entgegenhaltungen:
**DE - A - 1 164 114**
**DE - A - 2 136 003**
**DE - A - 2 617 317**

**INTERNATIONALE ELEKTRONISCHE RUNDSCHAU,
Band 18, Nr. 6, Juni 1964, Seiten 317-322; Th. GAST:
"Elektronische Wägung"**
**JOURNAL OF PHYSICS E; SCIENTIFIC INSTRUMENTS,
Band 7, Nr. 11, November 1974, Seiten 865-876; T. GAST:
"Vacuum microbalances, their construction and
characteristics"**
**INSTITUTION OF ELECTRICAL ENGINEERS,
CONFERENCE ON INDUSTRIAL MEASUREMENT
TECHNIQUES FOR ON-LINE COMPUTERS, London, 11.
- 13. Juni 1968, Nr. 43, Seiten 74-79, GB; T. GAST:
"Conversion of measuring values for mass, density and
flow into proportional frequencies with the aid of free
magnetic suspension"**
**Rev. Sci. Instrum., Vol. 55, No. 7, Juli 1984 Seiten
1132-1142, R. Masui et al. "Densimetry in compressed
fluids by combining hydrostatic weighing and magnetic
levitation".**

(73) Patentinhaber: **Lösch, Hans-Wilhelm, Emscherstrasse 8,
D-4630 Bochum 1 (DE)**
Patentinhaber: **Kleinrahm, Reiner, Röntgenring 2,
D-4030 Ratingen 1 (DE)**
Patentinhaber: **Kurzeja, Norbert, Emscherstrasse 8,
D-4630 Bochum (DE)**
Patentinhaber: **Pieperbeck, Bruno, Auf der
Papenburg 17/21, D-4630 Bochum 1 (DE)**
Patentinhaber: **Pieperbeck, Norbert, Barlachweg 42,
D-4630 Bochum 1 (DE)**
Patentinhaber: **Wagner, Wolfgang, Virchowstrasse 7,
D-4630 Bochum 1 (DE)**

(72) Erfinder: **Lösch, Hans-Wilhelm, Emscherstrasse 8,
D-4630 Bochum 1 (DE)**
Erfinder: **Kleinrahm, Reiner, Röntgenring 2,
D-4030 Ratingen 1 (DE)**
Erfinder: **Pieperbeck, Norbert, Barlachweg 42,
D-4630 Bochum 1 (DE)**
Erfinder: **Wagner, Wolfgang, Virchowstrasse 7,
D-4630 Bochum 1 (DE)**

(74) Vertreter: **Patentanwälte Wenzel & Kalkoff,
Flasskuhle 6 Postfach 2448, D-5810 Witten (DE)**

## Beschreibung

Die Erfindung betrifft eine Vorrichtung zur berührungslosen Ankoppelung eines hängenden Schwebeteils an eine Kraftmesseinrichtung, bei dem sich das hängende Schwebeteil innerhalb eines Gehäuses befindet und mit einem Magneten versehen ist, und sich die Einrichtung zur Messung einer Kraft ausserhalb des Gehäuses befindet und mit einem ansteuerbaren Elektromagneten versehen ist, wobei die Ansteuerung des Elektromagneten nach Massgabe einer Messeinrichtung zur Feststellung des Abstandes beider Magnete voneinander erfolgt, also mit Hilfe eines Regelkreises zur Einhaltung dieses Abstandes.

Die genannte Vorrichtung wird immer dann gebraucht, wenn die Kraftmessung nicht in dem Gehäuse stattfinden soll oder kann, weil z.B. die Kraftmesseinrichtung nicht den im Messraum herrschenden Bedingungen ausgesetzt werden kann oder soll. Das kann bei aggressiven Medien der Fall sein, oder auch ein entsprechender Druck in dem Messraum ist Ursache der Unverträglichkeit.

Eine derartige Vorrichtung zur berührungslosen Ankoppelung eines Schwebeteiles an eine Kraftmesseinrichtung ist z.B. in der DE-AS 1 164 114 beschrieben. Das an einer Waage aufgehängte Oberteil einer Lastschale wirkt durch ein Gehäuse hindurch auf das als Schwebeteil ausgebildete Unterteil der Lastschale, wobei die Messung der Lageänderung des Schwebeteils gegenüber dem Oberteil der Lastschale durch die Wand des Gehäuses hindurch an derselben Stelle erfolgt, an der auch die Kraftkoppelung mit Hilfe magnetischer Kräfte stattfindet. An dieser Stelle überlagern sich also ein Messsignal und ein Leistungssignal, deren gegenseitige Beeinflussung kaum ausgeschlossen werden kann. Entsprechend schwierig gestaltet sich der Umgang mit dieser bekannten Vorrichtung.

In derselben Druckschrift wird auch schon vorgeschlagen, die Lageänderung des Schwebeteils gegenüber der Kraftmesseinrichtung auf elektro-optischem Wege zu messen, wobei das Bezugssystem an dem Elektromagneten, also an der Kraftmesseinrichtung angebracht ist. Durch diese Abänderung sind zwar Störungen insbesondere des Messsignals durch ein Leistungssignal so gut wie ausgeschlossen, das Gehäuse muss jedoch an der entsprechenden Stelle bzw. an den entsprechenden Stellen lichtdurchlässig ausgebildet sein. Beiden Ausführungen ist gemeinsam, dass das Gehäuse an der Koppelstelle bzw. an der Durchgangsstelle für die elektro-optische Messeinrichtung starken Beschränkungen in der Werkstoffwahl unterliegt. Im einen Fall darf noch nicht einmal ein dia- oder paramagnetischer und elektrisch leitender Werkstoff verwendet werden, im anderen Fall ist eine verzerrungsfreie Lichtdurchlässigkeit erforderlich. Aus diesem Grund sind Messungen unter Hochdruck nicht möglich. Hinzu kommt, dass für die Messung der Lageveränderung nur einfache Systeme verwendet werden können, die keine Differentialmessung mit entgegengesetzt überlagerter Wirkung zulassen. Entsprechend gering ist die Empfindlichkeit, die noch zusätzlich dadurch geschwächt wird, dass die Abstandsmessung über eine relativ grosse Entfernung durch die Gehäusewand hindurch erfolgen muss.

Es ist demnach Aufgabe der Erfindung, eine Vorrichtung der eingangs genannten Art so abzuändern, dass von der Messeinrichtung zur Feststellung der Lageänderung des Schwebeteils keine Beschränkungen mehr bezüglich der Gestaltung des Gehäuses sowie der Lagenmesseinrichtungen vorhanden sind, so dass das Spektrum der Untersuchungen innerhalb des Gehäuses durch die Wahl der Gehäusewerkstoffe drastisch erweitert und die Güte der Schweberegelung durch den Einsatz genauerer Lagemesseinrichtungen erheblich verbessert werden kann.

Die Erfindung schlägt vor, dass die Messeinrichtung zur Erfassung der Lage des Schwebeteils ortsfest an dem Gehäuse, insbesondere innerhalb des Gehäuses angeordnet ist, und dass statt der Einhaltung des Abstandes der Magnete die Einhaltung einer vorgegebenen Sollage des Schwebeteils relativ zu dem Gehäuse die Ansteuerung des Elektromagneten bestimmt.

Bisher ist versucht worden, eine quasi starre Verbindung zwischen dem Schwebeteil und dem der Kraftmesseinrichtung zugeordneten Teil einer gattungsgemässen Vorrichtung aufrechtzuerhalten. Dieser Art einer quasi starren Verbindung durch eine Gehäusewand hindurch verlangt nach einer direkten Abstandsmessung zwischen den sich gegenüberliegenden Teilen der Koppelstelle oder einem ortsfesten Oberteil. Davon wendet sich die Erfindung ab. Vielmehr wird die Lage des Schwebeteils relativ zum Gehäuse konstant gehalten, wobei auch eine Variation des Abstandes zwischen den sich gegenüberliegenden Enden der Koppelstelle zugelassen werden kann. Dabei kann z.B. in einem Fall während des gesamten Koppelungszustandes eine konstante Sollage des Schwebeteils gegenüber dem Gehäuse vorgegeben werden, die auch dann erhalten bleibt, wenn der der Kraftmesseinrichtung zugeordnete Teil der Koppelstelle mässig schwingt. In einem anderen Fall kann die vorgegebene Sollage während des Koppelungszustandes derart variiert werden, dass die Steuerleistung des Elektromagneten um einen vorgegebenen konstanten Wert schwingt, also um einen Grundlastwert. Bei dieser Variante ändert sich der Abstand des Schwebeteils von dem Elektromagneten im Abhängigkeit von der absoluten Belastung bei sonst quasi starrer Verbindung.

Zusätzlich zu dem bisher beschriebenen Aufbau einer erfindungsgemässen Vorrichtung kann es zweckmässig sein, bei bestimmten, durch die Kraftmesseinrichtung hervorgerufenen Störbewegungen des Elektromagneten diese mit einer zweiten, ausserhalb des Gehäuses angeordneten Lagemesseinrichtung zu erfassen und als auszuregelnde Störgrösse bei der Ansteuerung des Elektromagneten zu berücksichtigen. Dieser grössere Aufwand ist z.B. dann erforderlich, wenn die Geschwindigkeit der Bewegungen des Elektromagneten nahe der Geschwindigkeit der Lagekorrektur des Schwebeteils liegt. Werden hingegen nur langsame Bewegungen des Elektromagneten erwartet, ist dieser zusätzliche Aufwand nicht erforderlich.

Die Plazierung der Messeinrichtung zur Feststellung der Lageänderung des Schwebeteils ortsfest an dem Gehäuse bringt nicht nur messtechnische Fortschritte mit sich — höchst genaue Differenzmessungen zur Feststellung der Lageänderung des Schwebeteils sind jetzt möglich — sondern schafft vor allem eine grössere Freiheit in der Gestaltung des Gehäuses, sei es zur Durchführung von Hochdruckmessungen unter Betriebsdrücken von bis zu 1000 bar und mehr oder kombinierte Messungen bei hohen Temperaturen und unter hohem Druck. Für die eigentliche Koppelstelle kann nämlich jetzt ein para- oder diamagnetischer, metallischer Werkstoff eingesetzt werden, da an dieser Stelle ausschliesslich magnetische Haltekräfte aufgebracht werden, die weitgehend störungsfrei durch die Gehäusewand übertragen werden. Besonders geeignet ist für die Koppelstelle z.B. eine hochreine, ausscheidungsgehärtete Kupfer-Beryllium-Legierung, die z.B. hohen Drücken widersteht.

Für die Messeinrichtung zur Feststellung der Lageänderung des Schwebeteils stehen bei der erfindungsgemässen Anordnung an dem oder in dem Gehäuse sämtliche Varianten zur Verfügung, insbesondere alle hochgenauen Messsysteme zur Durchführung einer Differenzmessung. Beispielsweise können zwei dem Gehäuse zugeordnete Spulen und eine dem Schwebeteil zugeordnete, zwischen den Spulen liegende Scheibe angeordnet sein, ebenso ist eine Anordnung mit zwei Scheiben möglich, wobei dann zwischen jedem aus einer Scheibe und einer Spule bestehenden Messsystem eine Abschirmung vorhanden sein kann. Die Messung kann nach dem Flussverdrängungs-Messprinzip oder nach dem Induktionsänderungs-Messprinzip vorgenommen werden; entsprechend sind die Werkstoffe der Scheibe bzw. der Scheiben ausgewählt und die Spulen in entsprechende Gehäuse eingebettet. Statt der Scheibe bzw. der Scheiben können auch Kerne verwendet werden, die in entsprechende Spulen eintauchen. Die Spulen können dabei innerhalb oder ausserhalb des Gehäuses angeordnet sein, wobei bei einer Anordnung innerhalb des Gehäuses vakuum- bzw. druckdichte Leitungsdurchführungen nach aussen vorgesehen sein müssen. Selbstverständlich können auch lichtelektrische, kapazitive oder ultraschallakustische Messwertgeber eingesetzt werden.

Die mit der erfindungsgemässen Vorrichtung ausgestatteten Einrichtungen zur Messung einer Kraft sind in der Regel so empfindlich, dass bei Messungen insbesondere über einen längeren Zeitraum eine sogenannte Nullpunktdrift auftreten kann, die dadurch gekennzeichnet ist, dass infolge äusserer Einwirkungen die Anzeige bei der Belastung Null bereits einen Wert angibt. Die Korrektur kann zwar sehr leicht, beispielsweise durch die übliche Tarafunktion oder dergleichen vorgenommen werden, es muss jedoch die Notwendigkeit einer Korrektur erkannt werden. Ähnliche Verhältnisse gelten bezüglich einer Kalibrierverschiebung, also einer Veränderung der Proportionalität der Anzeige.

Um diesen Schwierigkeiten zu begegnen, schlägt die Erfindung in Weiterbildung vor, dass das Schwebeteil wahlweise oder zusätzlich mit einer Referenzmasse und gegebenenfalls darüber hinaus mit einer Kalibriermasse belastbar ist. Durch einen Wechsel der Last an dem Schwebeteil von der Betriebslast auf die z.B. annähernd gleich schwere Referenzmasse wird die Gewichtskraft einer bekannten Masse festgelegt, wodurch eine mögliche Nullpunktverschiebung entdeckt und beseitigt werden kann. Das zusätzliche Auflegen einer Kalibriermasse gestattet dann, die Proportionalität zu kontrollieren bzw. richtig einzustellen, da zusätzlich zu der bekannten Grösse der Referenzmasse eine wiederum bekannte Kraftgrösse hinzugefügt wird, so dass eine vollständige Eichung der Einrichtung zur Messung einer Kraft vorgenommen werden kann.

Jede Masse ist vorzugsweise in einem gesonderten Abschnitt des Gehäuses untergebracht, der gegebenenfalls von dem restlichen Gehäuse, insbesondere von dem eigentlichen Messraum, thermisch entkoppelt ist.

Für eine besonders störungsfreie Kraftübertragung an der Koppelstelle kann es zweckmässig sein, wenn oberhalb des Elektromagneten ein nach aussen kraftneutrales Dämpfungsglied angeordnet ist, das mechanisch-hydraulisch oder mechanisch-elektrisch ausgebildet sein kann. Damit werden aus Störungen herrührende Schwingungen nur gedämpft an die Einrichtung zur Messung einer Kraft weitergeleitet.

Damit der gesamte Messvorgang gemäss eines vorgegebenen Programms auch über längere Zeit automatisch ablaufen kann, ist der Einsatz eines Prozessrechners zweckmässig, der den gesamten Messvorgang digital steuert, überwacht und auswertet.

Ausführungsbeispiele der Erfindung, die in der Zeichnung dargestellt sind, werden nachfolgend erläutert, in der Zeichnung zeigen:

Fig. 1 eine schematische Querschnittsansicht der erfindungsgemässen Vorrichtung im Zusammenhang mit einem teilweise dargestellten Gehäuse,

Fig. 2 eine Ansicht gemäss Fig. 1 eines weiteren Ausführungsbeispiels der Erfindung,

Fig. 3 ein schematisches Blockschaltbild für die Regelung der Koppelkräfte bei einer erfindungsgemässen Vorrichtung.

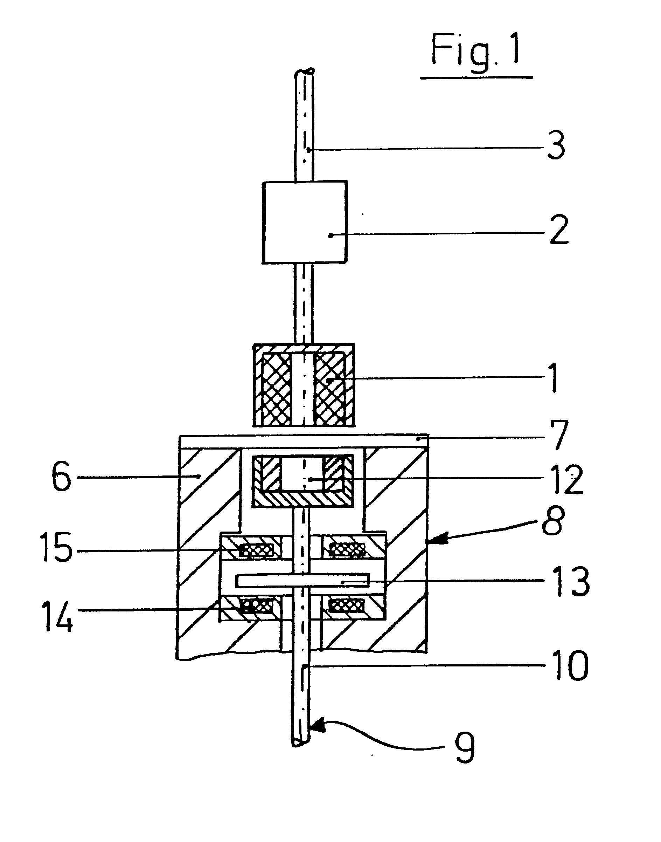

Die in der Fig. 1 dargestellte Vorrichtung ist Bestandteil einer Messanlage zur Bestimmung der Gewichtsänderung zu untersuchender Körper oder Flüssigkeiten aufgrund einer Dichteänderung, einer chemischen Reaktion oder für Absorptionsmessungen oder themo-gravimetrische Messungen. In jedem Fall ist eine Einrichtung zur Messung einer Kraft vorhanden, an deren freiem Ende 3 ein Elektromagnet 1 angebracht ist. Zwischen dem freien Ende 3 und dem Elektromagneten kann noch ein Dämpfungsglied 2 eingeschoben sein, das zur Unterdrückung von Störkräften zwischen dem Kraftmesssystem und dem dem Elektromagneten 1 nachgeordneten Schwebesystem dient.

Unterhalb des Elektromagneten 1 befindet sich ein Gehäuse 6, innerhalb dessen die zu messende Gewichtsänderung stattfindet, wobei die äusseren Bedingungen annähernd frei gewählt werden können. Das Gehäuse lässt also die Einstellung bestimmter Temperaturen, Drücke und die Befüllung mit bestimmten Gasen und darüber hinaus in gewissem Umfang Manipulationen zu, also z.B. Änderungen der Temperatur, Gaswechsel und dergleichen. Im Zusammenhang mit der Erfindung kommt es nur darauf an, dass sich innerhalb des Gehäuses 6 eine Gewichtsänderung ergibt, die möglichst genau auf das freie Ende 3 und damit auf die Einrichtung zur Messung einer Kraft übertragen wird.

Unmittelbar unter einem oberen Deckel 7, der das Gehäuse 6 nach oben hin abschliesst, befindet sich eine Messeinrichtung 8, die eine Lageveränderung eines Schwebeteils 9 registriert, an dem die Kraftänderung direkt oder indirekt angreift. In dem dargestellten Ausführungsbeispiel besteht das Schwebeteil aus einem Stab 10, es kann jedoch ebenso ein Platinfaden oder ein sonstiges Zugkräfte übertragendes Glied vorhanden sein, dessen Ausgestaltung sich nach der durchzuführenden Messung richtet.

Am oberen Ende des Stabes 10 befindet sich ein Dauermagnet, der von dem gesteuerten Elektromagneten 1 gerade so stark angezogen wird, dass er eine schwebende Lage einnimmt. Dieser Schwebezustand ist von Hause aus instabil und muss durch ein dauerndes Oszillieren um die instabile Gleichgewichtslage stabilisiert werden. Dazu dient die Messeinrichtung 8, die Aufschluss über die Lageveränderung des Stabes 10 und damit des Dauermagneten 12 gibt, und über entsprechende Zwischenglieder die genannte Steuerung des Elektromagneten 1 beeinflusst. Die Lageänderung wird mit Hilfe einer Scheibe 13 und mit Hilfe einer unteren Spule 14 und einer oberen Spule 15 festgestellt, wobei die Erfindung bekannte Wege beschreitet; entweder wird eine Messung aufgrund einer Flussverdrängung oder aufgrund einer Induktionsänderung durchgeführt. Danach richtet sich auch das Material der Scheibe 13 und das Einbettungsmaterial für die Spulen 14 und 15.

Gemäss einer ersten Variante der Erfindung wird eine vorgegebene Soll-Lage des Stabes und damit der Scheibe 13 gegenüber den Spulen 14 und 15 eingehalten. Das bedeutet, dass der Abstand zwischen dem Elektromagneten 1 und dem Dauermagneten 12 sich in weiten Bereichen beliebig ändern kann, wobei die schwächere Magnetwirkung bei grösseren Abständen durch eine entsprechend starke Ansteuerung des Elektromagneten 1 ausgeglichen wird.

Gemäss einer weiteren Variante kann auch eine weitergehende Steuerung des Schwebezustandes angewandt werden. Dabei wird der Elektromagnet 1 mit einer bestimmten Grundlast angesteuert, die z.B. eine mittlere Schwebelage des Schwebeteils 9 herbeiführt. Um diese Grundlast oszilliert das eigentliche Steuersignal, das demnach auch um den Wert Null pendeln kann. Massgebend für die Lage des Schwebeteils 9 bleibt jedoch die Soll-Lage zu dem Gehäuse 6, die jedoch von der Grundlast des Elektromagneten 1 beeinflusst wird. Im Ergebnis sind der Elektromagnet 1 und der Dauermagnet 12 quasi starr aneinander gekoppelt, allerdings hängt der Abstand zwischen diesen Teilen von der Belastung des Schwebeteils 9 ab; mit wachsender Last ist eine grössere Nähe des Dauermagneten 12 zu dem Elektromagneten 1 notwendig, damit bei konstanter Grundlast die Magnetkräfte infolge des geringeren Abstandes grösser sind, nämlich gerade so gross wie der Lastzuwachs gegenüber dem vorherigen Zustand.

Welche der genannten Varianten zum Einsatz kommt, richtet sich nach dem jeweiligen Einsatzzweck und auch nach der verwendeten Einrichtung zur Messung der Kraft.

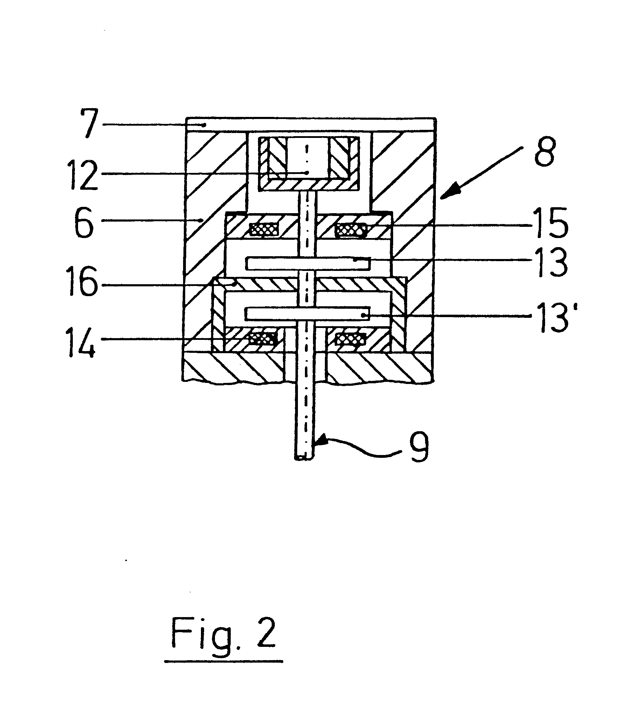

Bei dem Ausführungsbeispiel gemäss der Fig. 2 ist die Messeinrichtung 8 aufwendiger gestaltet. Der unteren Messspule 14 ist eine gesonderte Scheibe 13' zugeordnet, und auch die obere Spule 15 reagiert auf die Annäherung und Entfernung einer ihr zugeordneten Platte 13. Durch diesen Aufwand ist eine noch genauere Lagefeststellung möglich, da beide Messsysteme, bestehend jeweils aus einer Spule und einer Platte, voneinander abgeschirmt werden können, sich also nicht gegenseitig beeinflussen können. Dazu ist eine Abschirmung 16 vorhanden, die im übrigen gleichermassen auch ein Auflager für die Scheibe 13 und damit für das gesamte Schwebeteil 9 in der Ruhelage sein kann, also in den Messpausen. Das Anfahren der Ruhelage und das Abheben des Schwebeteils 9 aus der Ruhelage wird von einem Regler selbsttätig durchgeführt, wobei folgender Ablauf vorgegeben ist:

Vor Beginn der Koppelung zwischen dem Elektromagneten 1 und dem Dauermagneten 12 liegt die Scheibe 13 auf der Abschirmung 16 als Auflage auf. In dem Regler ist nun eine Anfahr-Sollwert-Lage gespeichert, die bei entsprechender Ansteuerung gerade zu einem Abheben der Scheibe 13 von der Abschirmung 16 führt. Dieser im hundertstel Millimeterbereich liegende erste Weg des Schwebeteils 9 wird also quasi im Sprung zurückgelegt, der jedoch angesichts der Kürze der Strecke und angesichts der Massebehaftung sehr weich ausfällt. Mit diesem Schritt wird lediglich der Übergang vom Aufliegen zum Schweben vollzogen. Von dieser Anfahr-Sollwert-Lage wird dann vorzugsweise kontinuierlich die eigentliche Betriebs-Soll-Lage angesteuert, was mit einer dauernden Abnahme der Gesamtbeaufschlagung des Elektromagneten 1 einhergeht, da sich der Abstand zwischen dem Elektromagneten 1 und dem Dauermagneten 12 dabei ständig verringert. Dieser Annäherung ist die hochfrequente Regelung überlagert, um anstelle des ansonsten labilen Gleichgewichts ein stabiles Gleichgewicht zu erhalten.

Am Ende der Koppelung läuft ein ähnlicher Vorgang ab. Gemäss einem vorgegebenen Absenkprogramm wird das Schwebeteil 9 vorzugsweise kontinuierlich in eine Absetz-Sollwert-Lage abgesenkt, die in der Regel der Anfahr-Sollwert-Lage entspricht. Es ist also gerade noch ein Schwebezustand vorhanden, der bei weiterer Absenkung des Schwebeteils 9 mehr oder weniger abrupt in einen Auflagezustand übergeht. Dieser Übergang ist jedoch wiederum so gut wie von keinen Stössen oder Schlägen begleitet, da die «Fallhöhe» zu gering ist für das Schwebeteil 9, um nennenswert an Geschwindigkeit zu gewinnen.

Bei dem Ausführungsbeispiel gemäss der Fig. 1 kann selbstverständlich die untere Spule 14 als Auflager für die Scheibe 13 dienen; dazu bedarf es also nicht einer gesonderten Abschirmung 16 gemäss dem Ausführungsbeispiel der Fig. 2. Abweichend davon kann an beliebiger Stelle ein gesondertes Auflager eigens für die Ruheperiode angebracht sein, auf das sich das Schwebeteil 9 mit einer entsprechenden Fläche niederlegt. Allerdings sollte dieses Auflager nicht allzu weit von der Messeinrichtung 8 entfernt angeordnet sein, damit nicht durch eine Längenänderung des Stabes 10 beispielsweise infolge einer Temperaturschwankung der geringe Übergangsweg vom Liegezustand zum Schwebezustand verlorengeht oder zu gross wird.

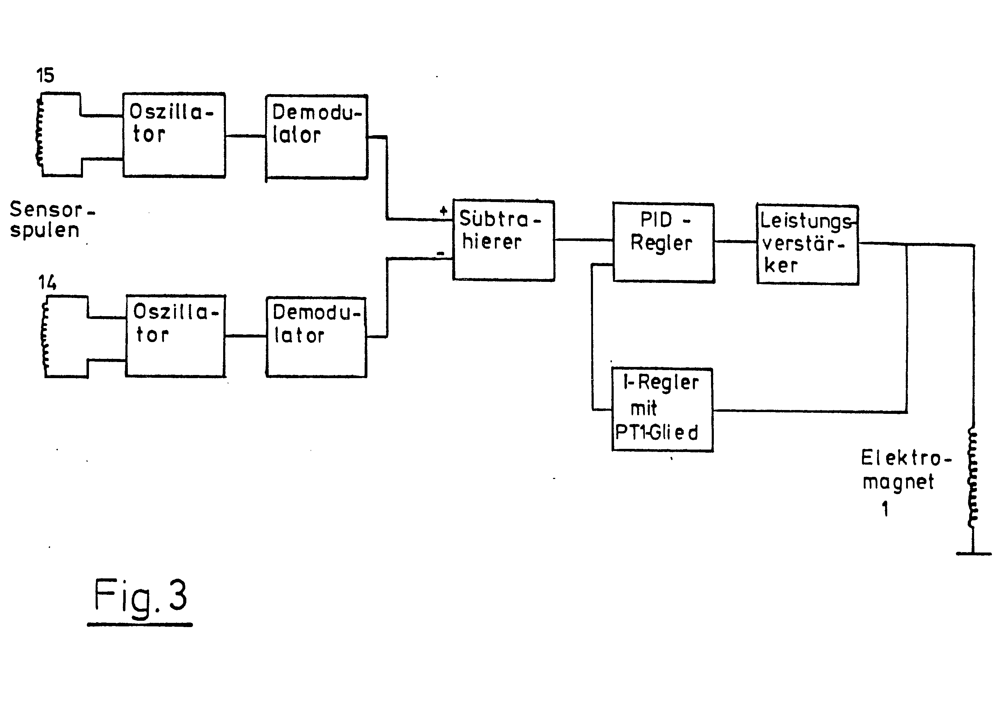

In der Fig. 3 ist ein Blockschaltbild zur Verdeutlichung der Ansteuerung des Elektromagneten 1 gemäss der Differenzmessung mit Hilfe der Spulen 14 und 15 veranschaulicht.

Die mit Hilfe jeweils eines Oszillators angesteuerten Spulen 14 und 15 ändern im Falle einer Lageänderung der Scheibe 13 bzw. der Scheiben 13 und 13' der ferromagnetischen Kerne 18 und 19 ihre Induktivität, was zu einer Änderung der Eigenfrequenz des jeweiligen Oszillators führt. Die Eigenfrequenz des Oszillators wird fortlaufend demoduliert und in ein der Eigenfrequenz proportionales Gleichstromsignal umgewandelt. Die Gleichstromsignale beider Spulen 14 und 15 werden in einem Subtrahierer entgegengesetzt überlagert, wodurch eine Verstärkung des Gesamtsignals erzielt wird. In einem Proportional-Integral-Regler mit Vorbehalt (PID-Regler) wird das Eingangssignal in kürzester Zeit in ein Steuersignal umgesetzt, das über einen Leistungsverstärker auf den Elektromagneten 1 gegeben wird. Jede Lageveränderung der Scheibe 13 bzw. der Scheiben 13 und 13' bzw. der ferromagnetischen Kerne 18 und 19 gegenüber den Spulen 14 und 15 führt also zu einem entsprechenden Stellwert an dem Elektromagneten 1.

Der dem PID-Regler vorgegebene Sollwert kann wahlweise konstant gehalten werden oder von einem Integral-Regler mit einem PT1-Glied modifiziert werden, dessen Eingangsgrösse die Leistung des Elektromagneten 1 ist. Im zweiten Fall wird dann der Elektromagnet 1 einem Grundlastwert zugeführt, der jeweils nur noch zur Einhaltung der stabilen Gleichtgewichtslage positiv oder negativ überlagert wird. In der Fig. 3 sind die verschiedenen Möglichkeiten der Sollwertvorgabe nicht eingezeichnet.

**Patentansprüche**

1. Vorrichtung zur berührungslosen Ankoppelung eines hängenden Schwebeteils an eine Kraftmesseinrichtung, bei der sich das hängende Schwebeteil (9) innerhalb eines Gehäuses (6) befindet und mit einem Magneten (12) versehen ist, und sich die Einrichtung zur Messung der Kraft ausserhalb des Gehäuses (6) befindet und mit einem ansteuerbaren Elektromagneten (1) versehen ist, wobei die Ansteuerung des Elektromagneten (1) nach Massgabe einer Messeinrichtung (14, 15) zur Feststellung des Abstandes beider Magnete voneinander erfolgt, also mit Hilfe eines Regelkreises zur Einhaltung dieses Abstandes, dadurch gekennzeichnet, dass die Messeinrichtung (14, 15) ortsfest an dem Gehäuse (6), insbesondere innerhalb des Gehäuses (6) angeordnet ist, und dass statt der Einhaltung des Abstandes der Magnete die Einhaltung einer vorgegebenen Sollage des Schwebeteils relativ zu dem Gehäuse (6) die Ansteuerung des Elektromagneten (1) bestimmt.

2. Vorrichtung nach Anspruch 1, dadurch gekennzeichnet, dass das Gehäuse (6) an der Koppelungsstelle zwischen dem Schwebemagneten (12) und dem Elektromagneten (1) aus einem metallischen, diamagnetischen oder paramagnetischen Werkstoff hoher Festigkeit, insbesondere aus einer hochreinen, ausscheidungsgehärteten Kupfer-Beryllium-Legierung (7) besteht.

3. Vorrichtung nach Anspruch 1 oder 2, dadurch gekennzeichnet, dass ein zweiter Regler (I-Regler) dem direkten Regelkreis überlagert ist, der den Steuerstrom des Elektromagneten (1) unabhängig von der Koppelkraft im Mittel um einen vorgegebenen Wert oszillieren lässt.

4. Vorrichtung nach einem der vorhergehenden Ansprüche, dadurch gekennzeichnet, dass zur Erfassung der Lageänderung des Elektromagneten (1) eine zweite, ausserhalb des Gehäuses (6) angeordnete Messeinrichtung vorhanden ist, und dass eine Regeleinrichtung nachgeschaltet ist, die den Messwert dieser Messeinrichtung als auszuregelnde Störgrösse bei der Ansteuerung des Elektromagneten (1) berücksichtigt.

5. Vorrichtung nach einem der vorhergehenden Ansprüche, dadurch gekennzeichnet, dass unterhalb des Schwebeteils (9) ein Auflager (16) für die Ruhelage des Schwebeteils (9) angeordnet ist, und dass zu Beginn und am Ende der Koppelung jeweils eine Anfahr- und Absetz-Sollage vorgegeben ist, in der das Schwebeteil (9) gerade von dem Auflager (16) abgehoben ist.

6. Vorrichtung nach einem der vorhergehenden Ansprüche, dadurch gekennzeichnet, dass die Messeinrichtung (8) aus zwei dem Gehäuse (6) zugeordneten Spulen (14, 15) und einer dem Schwebeteil (9) zugeordneten, zwischen den Spulen (14, 15) liegenden Scheibe (13) zur Durchführung einer Differenzmessung besteht.

7. Vorrichtung nach Anspruch 6, dadurch gekennzeichnet, dass zwei Scheiben (13, 13') vorgesehen sind, und dass zwischen beiden Scheiben eine Abschirmung (16) angebracht ist.

8. Vorrichtung nach Anspruch 6 oder 7, dadurch gekennzeichnet, dass jede Scheibe (13, 13') entweder aus einem unmagnetischen, elektrisch gut leitenden Werkstoff für ein Flussverdrängungs-Messprinzip oder aus einem ferro-magnetischen Werkstoff für ein Induktionsänderungs-Messprinzip besteht und die Spulen (14, 15) in jeweils elektrisch nicht leitende, unmagnetische Wicklungsträgergehäuse mindestens aber in unmagnetische Wicklungsträgergehäuse eingebettet sind.

9. Vorrichtung nach einem der Ansprüche 1 bis 5, dadurch gekennzeichnet, dass die Messvorrichtung (8) aus einem lichtelektrischen, kapazitiven, ultraschall-akustischen oder sonstigen Messwertgeber besteht.

10. Vorrichtung nach einem der vorhergehenden Ansprüche, dadurch gekennzeichnet, dass das Schwebeteil (9) wahlweise mit der Messkraft oder einer Referenzmasse und gegebenenfalls zusätzlich mit einer Kalibriermasse belastbar ist.

11. Vorrichtung nach Anspruch 10, dadurch gekennzeichnet, dass jede Masse in einem gesonderten Abschnitt des Gehäuses (6) untergebracht ist, der gegebenenfalls von dem restlichen Gehäuse (6) thermisch entkoppelt ist, insbesondere von dem eigentlichen Messraum.

12. Vorrichtung nach einem der vorhergehenden Ansprüche, dadurch gekennzeichnet, dass zwischen dem Elektromagneten (1) und der Einrichtung zur Messung einer Kraft ein nach aussen kraftneutrales Dämpfungsglied (2) angeordnet ist, insbesondere ein mechanisch-hydraulisches oder ein mechanischelektrisches.

13. Vorrichtung nach einem der vorhergehenden Ansprüche, dadurch gekennzeichnet, dass zur Übertragung von Signalen, insbesondere von Messsignalen von dem Schwebeteil (9) auf das Gehäuse (6) mindestens ein Hochfrequenz-Transformator vorgesehen ist, dessen eine Wicklung dem Schwebeteil (9) und dessen andere Wicklung dem Gehäuse (6) zugeordnet ist.

14. Vorrichtung nach einem der Ansprüche 1 bis 5, dadurch gekennzeichnet, dass die Messvorrichtung (8) aus zwei an dem Schwebeteil angebrachten Kernen und aus innerhalb oder ausserhalb des Gehäuses angeordneten Spulen besteht, in die die Kerne eintauchen.

## Claims

1. Device for the contactless coupling of a hanging suspended part to a force-measuring arrangement, in which the hanging suspended part (9) is located inside a housing (6) and is equipped with a magnet (12), and the arrangement for measuring a force is located outside the housing (6) and is equipped with an activatable electromagnet (1), the electromagnet (1) being activated according to a measuring arrangement (14, 15) for determining the distance between the two magnets, that is to say by means of a control circuit for maintaining this distance, characterized in that the measuring arrangement (14, 15) is arranged fixed in place on the housing (6), especially inside the housing (6), and in that, instead of the maintenance of the distance between the magnets, the maintenance of a predetermined desired position of the suspended part relative to the housing (6) determines the activation of the electromagnet (1).

2. Device according to Claim 1, characterized in that the housing (6), at the coupling point between the suspended magnet (12) and the electromagnet (1), consists of a metallic, diamagnetic or paramagnetic material of high strength, especially of a high-purity precipitation-hardened copper/beryllium alloy (7).

3. Device according to Claim 1 or 2, characterized in that a second controller (I-controller) is superposed on the direct control circuit and allows the control current of the electromagnet (1) to oscillate, on average, about a predetermined value independently of the coupling force.

4. Device according to one of the preceding claims, characterized in that, to detect the change in position of the electromagnet (1), there is a second measuring arrangement arranged outside the housing (6), and in that there follows a control arrangement which, in the activation of the electromagnet (1), takes the measured value of this measuring arrangement into account as a disturbance variable to be stabilized.

5. Device according to one of the preceding claims, characterized in that a support (16) for the position of rest of the suspended part (9) is arranged underneath the suspended part (9), and in that a desired starting and stopping position, in which the suspended part (9) is just lifted off from the support (16), is predetermined respectively at the beginning and end of the coupling.

6. Device according to one of the preceding claims, characterized in that the measuring arrangement (8) consists of two coils (14, 15) assigned to the housing (6) and of a disc (13) assigned to the suspended part (9) and located between the coils (14, 15), for carrying out a difference measurement.

7. Device according to Claim 6, characterized in that two discs (13, 13') are provided, and in that a screen (16) is mounted between the two discs.

8. Device according to Claim 6 or 7, characterized in that each disc (13, 13') consists either of a non-magnetic material of good electrical conductivity for the flux-displacement principle of measurement or of a ferro-magnetic material for the induction-change principle of measurement, and the coils (14, 15) are embedded respectively in electrically non-conductive non-magnetic winding-carrier housings, but at least in non-magnetic winding-carrier housings.

9. Device according to one of Claims 1 to 5, characterized in that the measuring arrangement (8) consists of a photoelectric capacitive ultrasonic-acoustic or other measurement sensor.

10. Device according to one of the preceding claims, characterized in that the suspended part (9) can be loaded selectively with the measured force or a reference mass and, if appropriate, additionally with a calibrating mass.

11. Device according to Claim 10, characterized in that each mass is accommodated in a separate portion of the housing (6) which, if appropriate, is uncoupled thermally from the remaining housing (6), especially from the actual measuring space.

12. Device according to one of the preceding claims, characterized in that arranged between the electromagnet (1) and the arrangement for measuring a force is a damping member (2) neutral in terms of force relative to the outside, especially a mechanical/hydraulic or mechanical/electric damping member.

13. Device according to one of the preceding claims, characterized in that, to transmit signals, especially measuring signals, from the suspended part (9) to the housing (6), there is at least one high-frequency transformer, of which one winding is assigned to the suspended part (9) and the other winding is assigned to the housing (6).

14. Device according to one of Claims 1 to 5, characterized in that the measuring arrangement (8) consists of two cores mounted on the suspended part and of coils which are arranged inside or outside the housing and into which the cores dip.

## Revendications

1. Dispositif de couplage sans contact d'une pièce suspendue avec un capteur de force, dans lequel la pièce suspendue (9) se trouve dans un boîtier (6) et est pourvue d'un aimant (12), et le capteur de force se trouve à l'extérieur du boîtier (6) et est pourvu d'un électroaimant (1) commandable, la commande de l'électroaimant se produisant selon la sortie d'un dispositif de mesure (14, 15) pour constater la distance entre les deux aimants au moyen d'un circuit de régulation pour maintenir cette distance, caractérisé par le fait que le dispositif de mesure (14, 15) est monté fixe par rapport au boîtier (6) et notamment à l'intérieur de ce boîtier (6), et que, au lieu du maintien de la distance entre les aimants, c'est le maintien d'une position nominale donnée de la pièce suspendue par rapport au boîtier (6) qui détermine la commande de l'électroaimant (1).

2. Dispositif selon la revendication 1, caractérisé par le fait que le boîtier (6), à l'endroit du couplage entre l'aimant suspendu (12) et l'électroaimant (1), est constitué d'un matériau métallique à haute résistance mécanique diamagnétique ou paramagnétique, notamment un alliage cuivre-beryllium (7) de haute pureté durci par trempe.

3. Dispositif selon la revendication 1 ou la revendication 2, caractérisé par le fait qu'un second régulateur (régulateur I) est adjoint au circuit de régulation directe et qui fait osciller le courant de commande de l'électroaimant (1) autout d'une valeur prédéterminée, indépendamment de la force de couplage.

4. Dispositif selon l'une des revendications précédentes, caractérisé par le fait que pour capter le changement de position de l'électroaimant (1), un second dispositif de mesure est présent à l'extérieur du boîtier (6) et qu'un dispositif de régulation y est relié et prend en compte la valeur mesurée par ce dispositif de mesure comme grandeur de perturbation pour la commande de l'électroaimant (1).

5. Dispositif selon l'une des revendications précédentes, caractérisé par le fait qu'en dessous de la pièce suspendue (9), un appui (16) est aménagé pour la position de repos de la pièce suspendue (9), et qu'au début et à la fin du couplage, une position nominale de départ et d'arrivée est prédéterminée et à partir de laquelle, la pièce suspendue (9) est soulevée de l'appui (16).

6. Dispositif selon l'une des revendications précédentes, caractérisé par le fait que le dispositif de mesure (8) est constitué de deux bobines (14, 15) associées au boîtier (6) et d'un disque (13) associé à la pièce suspendue (9) et disposé entre les bobines (14, 15) pour la réalisation d'une mesure différentielle.

7. Dispositif selon la revendication 6, caractérisé par le fait que sont prévus deux disques (13, 13') entre lesquels est disposé un blindage (16).

8. Dispositif selon la revendication 6 ou la revendication 7, caractérisé par le fait que chaque disque (13, 13') est constitué ou bien d'un matériau non magnétique bon conducteur électrique pour un principe de mesure par annulation de flux, ou bien d'un matériau ferromagnétique pour un principe de mesure par variation d'induction, et que les bobines (14, 15) sont noyées respectivement dans des boîtiers porteurs d'enroulements non conducteurs électriques et non magnétiques, ou au moins non magnétiques.

9. Dispositif selon l'une des revendications 1 à 5, caractérisé par le fait que le dispositif de mesure (8) est constitué d'un capteur de mesure photoélectrique, capacitif, à ultrasons ou autre.

10. Dispositif selon l'une des revendications précédentes, caractérisé par le fait que la pièce suspendue (9) peut être chargée au choix par la force à mesurer ou une masse de référence, et le cas échéant, en outre par une masse d'étalonnage.

11. Dispositif selon la revendication 10, caractérisé par le fait que chaque masse est disposée dans une section séparée du boîtier (6), le cas échéant thermiquement isolée du reste du boîtier (6) et en particulier de l'ambiance.

12. Dispositif selon l'une des revendications précédentes, caractérisé par le fait qu'entre l'électroaimant (1), et le dispositif de mesure de force, est disposé un amortisseur (2) mécaniquement neutre vis-à-vis de l'extérieur, notamment un amortisseur mécanique-hydraulique ou électromagnétique.

13. Dispositif selon l'une des revendications précédentes, caractérisé par le fait que, pour la transmission de signaux, notamment de mesure, de la pièce suspendue (9) au boîtier (6), est aménagé au moins un transformateur à haute fréquence dont un enroulement est associé à la pièce suspendue (9) et l'autre au boîtier (6).

14. Dispositif selon l'une des revendications 1 à 5, caractérisé par le fait que le dispositif de mesure (8) est constitué de deux noyaux disposés sur la pièce suspendue et de deux bobines disposées à l'intérieur ou à l'extérieur du boîtier et dans lesquelles plongent les noyaux.

Fig. 1

Fig. 2

Fig. 3